# EUROPEAN PATENT APPLICATION

(11) **EP 4 413 869 A1**
(43) Date of publication of application: **14.08.2024**
(21) Application number: 23461514.4
(22) Date of filing: 09.02.2023
(51) Int. Cl.: A23L 5/43, A23L 5/44, A23L 19/18

(54) **METHOD OF MANUFACTURING EDIBLE POTATO CHIPS**

(71) Applicant: Baranovski, Oleg, 05-250 Radzymin (PL)
(72) Inventor: Kozyrevich, Olga, 223146 Avgustovo (BY); Paulovich, Siarhei, 05-250 Radzymin (PL)
(74) Representative: AOMB Polska Sp. z.o.o.

(57) **Abstract**

The method of manufacturing edible potato chips which comprise the following steps:
- Cutting potatoes into slices;
- Rinsing the potato slices in water using the primary washer (12);
- Placing the potato slices in secondary washer (14) that contains a coloring solution in the form of water with a dye dissolved in it, with the solution being soaked in secondary washer (14) to color the potato slices;
- Placing the soaked potato slices on mesh conveyor (15) for drying;
- Placing the potato slices in oven (16) and frying them in oil for 2-3.5 minutes at 156-167°C in an alternating electromagnetic field with a frequency of 22-41 Hz;
- Transporting the fried potato slices from oven (16) to bunker (21), while cooling down the fried slices using natural heat exchange with the environment;
- Transporting the fried potato slices from bunker (21) to dispensing drums (23), where spices and flavorings are applied to the surface of the fried potato slices;
- Wrapping up the fried potato slices using packaging equipment (24)

## Description

### Field of Technology

The subject of the invention is a method of manufacturing edible potato chips. In addition, by using the method according to the invention, it is possible to obtain chips of different colors.

### State of the Art

The state of the art knows various conventional methods for making potato chips.

Document RU2688374C1 reveals a method of manufacturing potato chips that involves peeling, washing, slicing, and blanching potatoes. According to the method, potato slices are sprinkled with a solution of lactulose which has been previously diluted with water and mixed with potato starch, dill, ground black pepper, onion extract, and salt. The product consists of the following ingredients (wt. %): potatoes-79, lactulose solution-5, water-10, potato starch-1.5, potato starch-2.5, mixture of spices-1.0, salt-2.5. The method enables to obtain potato chips with reduced fat content and traditional organoleptic properties.

Publication RU2569823C1 describes a method of manufacturing chips from raw potatoes, which involves cutting potatoes into slices. The chips consist of the following components (wt. %): potatoes-90, lactulose solution-8, mixture of spices-0.5, salt-1.5. During the manufacturing process, potatoes are peeled, washed, cut into 1.5 mm thick slices, treated with superheated steam at 170-220°C for 6-15 minutes, then the slices are laid out on a flat surface, left to cool down for 10-40 minutes, after which they are immersed in a solution of lactulose blended with a mixture of spices and salt. Next, the slices are taken out and dried at 60-90°C for 1-4 hours, cooled down to room temperature and wrapped up in airtight packaging.

Document WO 2006019689 outlines a method of manufacturing potato chips that involves the following steps: (a) frying a large number of potato slices in oil in the gutter zone of the unit at an initial oil temperature ranging from approx. 300°F to 320°F, with the potato slices and oil leaving the gutter to enter the input zone of the unit; (b) the cooling oil is pumped from the hot oil cooling zone to the input zone of the unit, with the pumped cooling oil having a lower temperature than the oil in the input zone, and the potato slices are passed across the remaining area of the unit once they leave the input zone; (c) the hot oil is pumped during the process across the remaining part of the unit downstream of the input zone through an oil drain hole, with the pumped hot oil having a higher temperature than the oil in the remaining part of the unit, and the oil in the remaining part of the unit exits it in front of the oil drain hole during the process.

### Essence of the Invention

The purpose of the invention is to develop a method of manufacturing potato chips with improved visual-optical indicators. By applying the method according to the invention, it is possible to obtain potato chips of various colors and enhanced quality.

The invention features a method of manufacturing edible potato chips which consists of the following steps:
a) Cutting potatoes into slices;
b) Rinsing the potato slices in water using a primary washer;
c) Placing the potato slices in a secondary washer that contains a coloring solution of water and a dissolved dye, with the solution being immersed in the secondary wash to provide the potato slices with color;
d) Placing the potato slices immersed in a coloring solution on a mesh conveyor to dry them out;
e) Placing the potato slices in an oven and frying them for 2-3.5 minutes in oil at 156-167°C in an alternating electromagnetic field with a frequency of 22-41 Hz;
f) Transporting the fried potato slices from the oven to the bunker, while cooling down the fried slices using natural heat exchange with the environment;
g) Transporting the fried potato slices from the bunker to dispensing drums filled with spices and flavorings, where the spices and flavorings are applied to the surface of the fried potato slices;
h) Wrapping up the fried potato slices using packaging equipment;

It is beneficial when step (b) is followed by process (b1) in which the potato slices are blanched.

It is beneficial when step (d) is conducted in knife air streams that ensure even distribution of the potato slices across a mesh conveyor belt.

It is beneficial when step (e) is conducted in a continuous mode.

It is beneficial when step (e) uses vegetable oil, preferably palm oil.

It is beneficial when step (c) uses a vegetable food colorant, preferably in the form of powdered red beet juice concentrate, powdered pepper, powdered beta-carotene, or powdered chlorophyll copper complexes.

It is beneficial when powdered red beet juice concentrate dissolved in water in a quantity equal to 10-12% by weight is used to color the potato slices.

It is beneficial when powdered pepper dissolved in water in a quantity equal to 2-3% by weight is used to color the potato slices.

It is beneficial when powdered beta-carotene dissolved in water in a quantity equal to 2-3% by weight is used to color the potato slices.

It is beneficial when powdered chlorophyll copper complexes dissolved in water in a quantity equal to 1-2% by weight are used to color the potato slices.

### Beneficial Effects

By using the method of manufacturing potato chips according to the invention, it is possible to obtain chips of various colors, as required, with varying intensity of color.

### Brief Description of the Figures

Now, the invention is going to be presented in more detail by using a preferable example of application and making reference to the attached drawings, where:
Fig. 1 shows a diagram of the production line's section used for potato washing and preparation.
Fig. 2 shows a diagram of the production line's section used for the coloring of potato chips.

### Detailed Description of a Preferable Example of Application

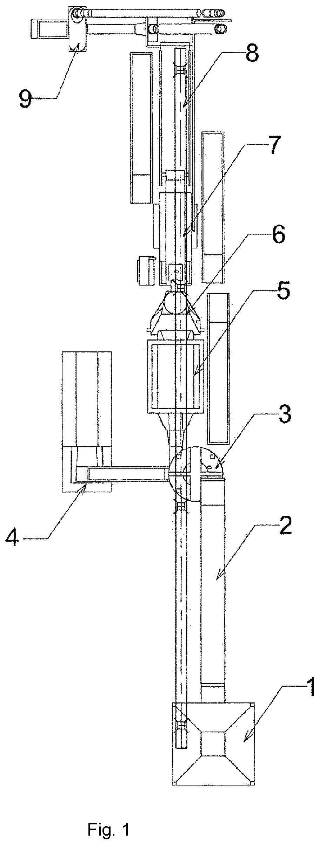

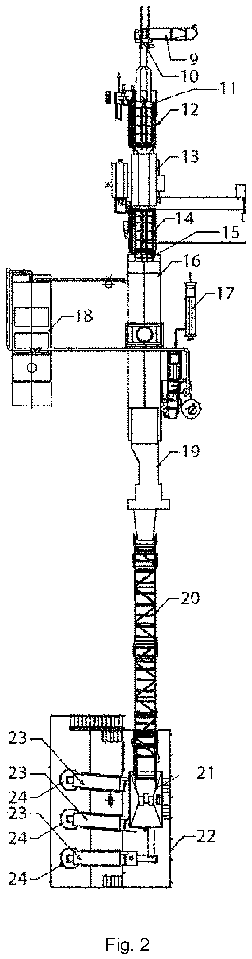

The method according to a preferable example of implementing the invention uses the production line shown in Fig. 1 and 2.

It is beneficial when potato chip production line 1 consists of kinematically and functionally interconnected assemblies of the potato preparation and the potato production zones, i.e.: receiving bunker 1, conveyor 2, conical hopper 3 with a stone separator, stone bin 4, drum washer 5, conveyor 6, potato peeler 7, inspection conveyor 8, hydraulic conveyor 9, potato bunker 10, slicing unit 11 with a drum cutting system and primary washer 12, blancher 13, secondary washer 14, mesh conveyor 15, oven 16, oil filter 17, heat exchanger 18, inspection conveyor 19 to check slices after they are fried in the oven 16, conveyor systems 20, bunker 21, conveyor distribution system 22, dispensing drums 23, and packaging unit 24.

The method of manufacturing edible potato chips consists of several steps. First, potatoes of different varieties suitable for being processed into chips are used to prepare raw potato slices (raw material). Potatoes are fed from containers onto the production line using a forklift truck and are subsequently placed in receiving bunker 1. The potatoes are moved by conveyor 2 from receiving bunker 1 to conical hopper 3 with a stone separator, where stones are removed by stirring the potatoes with rotating paddles and simultaneously pouring a stream of cold water on them so that the stones could fall onto the bottom of conical hopper 3 and be subsequently transported to stone bunker 4. Next, the potatoes are passed for washing to rotating horizontal drum 5 with slotted holes, where they are mixed and simultaneously washed with water by means of a sprayer.

Once washed, the potatoes are transported by conveyor 6 to potato peeling zone 7, where it is beneficial when potato tubers are peeled off using brushes or abrasive elements, and are then passed to inspection conveyor 8, where the potatoes with peel, eye-like spots, and greenish and damaged tubers are manually sorted out and discarded.

Cleaned on hydraulic conveyor 9, the potatoes are transferred to the potato bunker, from where they are passed to a continuously operating slicing unit 11 with a drum cutting system to cut the potatoes into slices under a continuous flow of water.

Once the slicing is complete, the slices are passed to primary water washer 12, where they are stirred and rinsed using injectors to remove free starch particles from their surface. Alternatively, in the next step, the potato slices, if necessary, are blanched in blancher 13. The slices are then sent through a peripheral gutter with a constant flow of dyed water fed by the circulation pump for dyeing to the secondary washer, where a vegetable food dye has previously been dissolved in water. Dyeing involves immersing potato slices in an aqueous solution of a vegetable food dye of a specific color.

Depending on the color chosen for dyeing raw potato slices, powdered red beet juice concentrate (red, pink, etc.), powdered pepper (red, orange, etc.), or any other powdered vegetable dye, such as chlorophyll copper complexes (green), are used as a vegetable food colorant.

Blanching (from the French *blanchir*)-a type of thermal treatment of food which involves immersion in boiling water for a few to several dozens of seconds and subsequent cooling by immersion in cold water (preferably with the addition of ice).

Blanching is usually applied to delicate fruits and vegetables (e.g., sorrel leaves, broccoli). Their vitamin content is not affected by it. Blanching before refrigerating preserves their natural color. In addition to deactivating their enzymes, blanching also helps wash the raw material and reduce its microbial infections, eliminate gases from the cells and the intercellular space to reduce the free space after packaging and prevent corrosion of the cans, as well as improve the texture of food, especially when it is dehydrated at a later stage, to prevent any loss of water-soluble nutrients. Blanching can be done: in water steam; by microwave heating; by immersion in hot water, or in a salt or sugar solution.

It is beneficial when powdered red beet juice concentrate is added to a 10-12% solution to enable the dyeing of raw potato slices into various intensities of red. Added to a solution at a concentration of 1-2%, powdered chlorophyll copper complexes are used to dye raw potato slices into various intensities of green, and powdered beta-carotene or powdered pepper makes it possible to dye raw potato slices into orange when its concentration in the solution is 2-3%. The solution's Ph value ranges from 5.5 to 7.8.

Once dyed, the slices are then pre-dried on mesh conveyor 15 using air knives, the air jets of which simultaneously distribute the potato slices evenly on mesh conveyor 15, while removing the residual water that trickles back into secondary washer 14. The air knife helps create a thin, fast, and very powerful air jet right at the outlet, which is one of the biggest advantages of its design. The air knife is formed by the movement of the air jet through a specially profiled blade, which creates an opportunity for the compressed air to adhere to the texture of the knife and then suck in the surrounding air and thus increase the total volume of the air jet. Thus, it has more space to make proper use of the air jet (due t o its integrity across the zones where the air jet is located further away). Advantages of air knives-learn how our products can benefit you!

Profits from using air knives: compared to other purging methods, air knives on average use as much as 1/3 of the compressed air. However, other clear economic advantages are often attributable to lower consumption during cooling, purging, drying, cleaning, and air curtain. Industrial advantages and benefits of air knives: the refined design results in a thin stream of air leaving the outlet with high force and speed; an excellent method of reducing air intake where a constant supply of air is required; the air flow is markedly intensified at the outlet; the air flow can be easily controlled through adjusting a gap; negligible noise levels; low operating costs, no movable parts, so no maintenance is needed; due to the modular design, an infinite number of combination possibilities and flexible completion times; various materials to make surfaces from and various treatment possibilities to apply; easy combination regardless of the knife's position; can be completed with a device to remove static charges or perform air volume measurement; a wide range of handles, various pneumatic accessories.

As the airflow is easily adjustable, you can seamlessly upgrade the knives as needed for your specific application. Along with the knife, it is possible to provide specific films that determine the spread of the knife's crack and affect the dynamic air pile-up and air volume.

When dried up, the potato slices are carried on by mesh conveyor 15 to oven 16 for frying, which uses vegetable oil and takes 2-3.5 minutes in continuous mode at 156-167°C in an alternating electromagnetic field with a frequency of 22-41 Hz. Continuous mode means uninterrupted, one-step frying to obtain well-fried chips. Such frying parameters combined with electromagnetic heating of potato slices ensure efficient dye fixation in potato plant cells, which results in better visual qualities of the finished product. The oil level in oven 16 is maintained by automatically topping up fresh oil, with the oil being filtered using oil filter 17 during the circulation process of the heating system, which allows the separation of burnt particles, and heated in heat exchanger 18.

Once the fried potato slices have left oven 16, they are passed onto an inspection conveyor, where those which are damaged are sorted out and removed. Once fried up, slices of suitable quality are directed by means of conveyor system 20 to bunker 21, which is located on a platform with conveyor system 22, with the cooling taking place during the transportation using natural heat exchange with the environment.

When fried up and cooled down, the slices are passed by conveyor system 22 from bunker 21 to dispensing drums 23, where they are mixed while flavorings and salt are applied to the surface as required by the recipe, which results in a finished product, i.e. colored potato chips. The ready-to-eat colored potato chips are passed from dispensing drums 23 to packaging units 24 to package and label them according to GOST requirements.

It is beneficial when flavor and aroma additives are selected so as to give the colored chips the taste and smell of onion cream, grilled meat, crab, or cheese.

It is beneficial when potato chips manufactured using the method according to the invention can take the form of thin oval slices, disks with an even or rugged surface, and any curved shape. They can also come in the form of straws and many other coveted shapes.

Depending on how much dye is applied and what seasonal raw material is used for the preparation of natural dyes, various hues of color chips can be obtained. Table 1 shows examples of how the method can be used for various options and ranges of the dye applied.

**Table 1. Use of the method according to the invention to obtain various variants of the product**

| Example | Dye ingredients according to the recipe | Organoleptic properties of colored potato chips | Physical and technical properties of colored potato chips | Note |
|---|---|---|---|---|
| 1 | Powdered red beet juice | **External appearance and shape:** product shaped as thin oval slices, discs, with an even, [or] rugged surface, in any curved shape, straw, etc. | **Color of the finished product**: red with various intensities | The intensity of the finished product's coloration directly depends on the seasonality of the raw material used to prepare natural dyes |
| | Color: red | | | |
| | | Deviations from the correct shape of slices, slight damage and bubbles on their surface, traces of peel and eye-like spots are acceptable. Some darker (orange to brown) veins and small spots along the edge of slices as well as fatty places (glassy spots) may occur. | Color intensity E (1%/1cm) at 515 nm-68-82 | |
| | | **Taste and smell-**matching the additives applied to the chips. | | |
| | | **Consistency-**crunchy (but not hard). | | |
| 3 | Chlorophyll copper complexes | **External appearance and shape:** product shaped as thin oval slices, discs, with an even, [or] rugged surface, in any curved shape, straw, etc. | **Color of the finished product:** green of varying intensities | The intensity of the finished product's coloration directly depends on the seasonality of the raw material used to prepare natural dyes |
| | Color: green | | | |
| | | Deviations from the correct shape of slices, slight damage and bubbles on their surface, traces of peel and eye-like spots are acceptable. Some darker (orange to brown) veins and small spots along the edge of slices as well as fatty places (glassy spots) may occur. | | |
| | | **Taste and smell**-matching the additives applied to the chips. | | |
| | | Consistency-crunchy (but not hard). | | |
| | Pepper or beta-carotene | **External appearance and shape:** product shaped as thin oval slices, discs, with an even, [or] rugged surface, in any curved shape, straw, etc. Deviations from the correct shape of slices, slight damage and bubbles on their surface, traces of peel and eye-like spots are acceptable. Some darker (orange to brown) veins and small spots along the edge of slices as well as fatty places (glassy spots) may occur. | **Color of the finished product:** orange of varying intensity | The intensity of the finished product's coloration directly depends on the seasonality of the raw material used to prepare natural dyes |
| | Color: orange | | | |
| | | **Taste and smell**-matching the additives applied to the chips. | | |
| | | Consistency-crunchy (but not hard). | | |

## Claims

1. The method of manufacturing edible potato chips which comprise the following steps:
a) Cutting potatoes into slices;
b) Rinsing the potato slices in water using primary washer (12);
c) Placing the potato slices in secondary washer (14) that contains a coloring solution in the form of water with a dye dissolved in it, with the solution being soaked in secondary washer (14) to color the potato slices;
d) Placing the potato slices soaked in the coloring solution on mesh conveyor (15) for drying;
e) Placing the potato slices in oven (16) and frying them in oil for 2-3.5 minutes at 156-167°C in an alternating electromagnetic field with a frequency of 22-41 Hz;
f) Transporting the fried potato slices from oven (16) to bunker (21), while cooling down the fried slices using natural heat exchange with the environment;
g) Transporting the fried potato slices from bunker (21) to dispensing drums (23) filled with spices and flavorings, where they are applied to the surface of the fried potato slices;
h) Wrapping up the fried potato slices using packaging equipment (24);

2. The method according to claim 1 **characterized in that** step b) is followed by process b1), in which the potato slices are blanched.

3. The method according to claims 1 or 2 **characterized in that** step d) takes place in air streams that are beneficially directed by air knives, which air streams ensure an even distribution of the potato slices on mesh conveyor belt (15).

4. The method according to any of claims 1-3, **characterized in that** step (e) takes place in a continuous mode.

5. The method according to any of claims 1-4, **characterized in that** process (e) uses vegetable oil, preferably palm oil.

6. The method according to any of claims 1-5, **characterized in that** in step c) a vegetable food dye is used, preferably in the form of powdered red beet juice concentrate, powdered pepper, powdered beta-carotene, or powdered chlorophyll copper complexes.

7. The method according to claim 6, **characterized in that** powdered red beet juice concentrate dissolved in water in a quantity equal to 10-12% by weight is used to color the potato slices.

8. The method according to claim 6, **characterized in that** powdered pepper dissolved in water in a quantity equal to 2-3% by weight is used to color the potato slices.

9. The method according to claim 6, **characterized in that** powdered beta-carotene dissolved in water in a quantity equal to 2-3% by weight is used to color the potato slices.

10. The method according to claim 6, **characterized in that** powdered chlorophyll copper complexes dissolved in water in a quantity equal to 1-2% by weight is used to color the potato slices.
